**Europäisches Patentamt**

**European Patent Office**

**Office européen des brevets**

(19)

(11) Veröffentlichungsnummer: **0 023 198**
**B1**

# EUROPÄISCHE PATENTSCHRIFT

(12)

(45) Veröffentlichungstag der Patentschrift:
**25.05.83**

(21) Anmeldenummer: **80890080.7**

(22) Anmeldetag: **17.07.80**

(51) Int. Cl.³: **B 23 P 15/28** // E21B10/52

(54) Verfahren zur Herstellung von Arbeitswerkzeugen für Gestein.

(30) Priorität: **20.07.79 AT 5020/79**

(43) Veröffentlichungstag der Anmeldung:
**28.01.81 Patentblatt 81/4**

(45) Bekanntmachung des Hinweises auf die Patenterteilung:
**25.05.83 Patentblatt 83/21**

(84) Benannte Vertragsstaaten:
**CH DE LI SE**

(56) Entgegenhaltungen:
**FR-A-2 394 574**
**US-A-2 973 047**
**US-A-3 003 370**
**US-A-3 461 983**
**US-A-3 513 728**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Grois, Peter, Brigittagasse 19-21/47, A-1200 Wien (AT)**

(74) Vertreter: **Widtmann, Georg, Dr., Elisabethstrasse 12, A-1010 Wien (AT)**

Verfahren zur Herstellung von Arbeitswerkzeugen für Gestein

Die Erfindung betrifft ein Verfahren zur Herstellung von mit Hartmetall- oder Diamanteinsätzen bestückten Arbeitswerkzeugen für Gestein oder Mineralien, insbesondere von Schneidringen für Vollschnittmaschinen, wobei ein Grundkörper aus Stahl vorzugsweise durch Drehen hergestellt und mit Ausnehmungen für die Einsätze versehen wird.

Es ist ein Verfahren der angeführten Art bekannt, bei dem die Verschleißstellen des Grundkörpers dadurch gepanzert werden, daß auf den bereits mit stiftförmigen Hartmetalleinsätzen versehenen Grundkörper verschleißfestes Material durch Auftragsschweißen aufgebracht wird. Hierbei ist das Entstehen großer Spannungen im Grundkörper und in den Hartmetalleinsätzen unvermeidlich. Die Spannungen können sofort oder schon nach einer verhältnismäßig kurzen Betriebszeit des betreffenden Arbeitswerkzeuges Brüche in den Hartmetalleinsätzen oder im Grundkörper verursachen. Die durch das Auftragsschweißen gebildete Aufpanzerung neigt überdies dazu, sich infolge der im Betrieb auftretenden Belastungen vom Grundkörper abzulösen. Jedenfalls darf zur Vermeidung einer schädlichen thermischen Belastung die Auftragsschweißung mit verschleißfestem Material nicht in unmittelbarer Nähe der Hartmetalleinsätze vorgenommen werden. Deshalb erfolgt dort am Grundkörper ein verhältnismäßig rascher Verschleiß, der die Standzeit des betreffenden Arbeitswerkzeuges nicht zuletzt dadurch vermindert, daß es zum Ausbrechen der Hartmetalleinsätze kommt.

Um ein solches Ausbrechen der Einsätze zu verhindern, ist es schon bekannt, den Grundkörper pulvermetallurgisch, u. zw. in einer kompressiblen, mit Metallpulver gefüllten und mit den Schneidelementen versehenen Form durch isostatisches Zusammenpressen (Kaltverdichten) und anschließendes isostatisches Nachverdichten im erhitzten Zustand herzustellen (DE-A-2 812 590). Den dabei erreichten Vorteilen steht der sehr erhebliche Aufwand dieser Herstellungsmethode gegenüber.

Gemäß der US-A-3 003 370 wird auf die Anbringung von Hartmetalleinsätzen bei konischen Bohrköpfen überhaupt verzichtet und statt dessen vorgeschlagen, aus dem Grundwerkstoff Zahnreihen bestimmter Formgebung mit abgerundeten Zähnen herauszuarbeiten und den Schneidkopf sodann einer speziellen Einsatzhärtung zur Schaffung einer einheitlichen, härteren Oberflächenschicht zu unterziehen. Es versteht sich dabei von selbst, daß die Belastbarkeit der aus dem Grundwerkstoff geformten Zähne diejenige von Hartmetalleinsätzen bei weitem nicht erreicht, so daß dieser Vorschlag nicht als eine brauchbare Problemlösung betrachtet werden kann.

Der Erfindung liegt die Aufgabe zugrunde, die angeführten Nachteile zu vermeiden und ein Verfahren der eingangs genannten Art zu schaffen, durch das schädliche Spannungen im Grundkörper sowie in den Hartmetall- bzw. Diamanteinsätzen des betreffenden Arbeitswerkzeuges mit Sicherheit vermieden werden und das auf einfache Weise die Herstellung einer bis zu diesen Einsätzen reichenden verschleißfesten Oberflächenschicht ermöglicht, eine dauerhafte Verankerung der Einsätze im Grundkörper sicherstellt und damit eine wesentliche Verbesserung der Standzeiten erbringt.

Diese Aufgabe wird erfindungsgemäß dadurch gelöst, daß im Grundkörper an den für die Einsätze bestimmten Stellen Hilfsbohrungen mit kleinerem Lumen hergestellt, und daß darin mit Köpfen und gegebenenfalls zusätzlichen Scheibenringen versehene Abdeckteile fixiert werden, deren Köpfe mittelbar oder unmittelbar eine Abdeckung des zum gewünschten Endmaß der Bohrungen reichenden Oberflächenbereiches des Grundkörpers bewirken, daß dann im Grundkörper eine härtbare Oberflächenschicht, z. B. mit einer Stärke von ca. 3 mm, hergestellt, die Oberflächenschicht vorzugsweise nach Entfernung der Abdeckteile gehärtet und zugleich der Grundkörper vergütet wird, worauf die Hilfsbohrungen auf das Endmaß vergrößert und die Hartmetall- bzw. Diamanteinsätze in diese Ausnehmungen in an sich bekannter Weise eingebracht werden.

Gemäß einer bevorzugten Ausführungsform der Erfindung wird die härtbare Oberflächenschicht, z. B. mit einer Stärke von 3 mm, durch Randaufkohlen des Grundkörpers hergestellt, zweckmäßig derart, daß in die Flanken der Hilfsbohrungen ein Gewinde geschnitten und mit dem Kopf bzw. der Beilagscheibe einer dazupassenden Schraube ein auf der dem Grundkörper zugewandten Seite mit einer hitzebeständigen Abdichtmasse für Aufkohlungsarbeiten versehenes Kupferplättchen auf den Grundkörper gepreßt, daß dann die härtbare Oberflächenschicht durch Randaufkohlen des Grundkörpers hergestellt und nach Entfernung der Schrauben und Plättchen im Warmbad gehärtet, sowie der Grundkörper vergütet wird, und daß schließlich die Hilfsbohrungen auf das Endmaß aufgebohrt werden und jeweils ein Hartmetall- bzw. Diamanteinsatz in an sich bekannter Weise eingepreßt wird.

Es ist aber im Rahmen der Erfindung auch in vorteilhafter Weise möglich und vorgesehen, daß die härtbare Oberflächenschicht durch Auftragsschweißen auf den Grundkörper aufgebracht wird. Dabei wird in die Hilfsbohrungen je ein an deren Flanke satt anliegender, einen Bund aufweisender Kupferstift hineingesteckt, so daß die Bunde die bis zum Endmaß der Bohrung reichende Oberfläche des Grundkörpers abdecken, auf den Grundkörper, vorzugsweise in darin angebrachten Vertiefungen, härtbarer Stahl durch Auftragsschweißen aufgebracht, nach dem Entfernen der Kupferstifte die aufgebrachte Oberflächenschicht gehärtet und zugleich der Grundkörper vergütet und schließlich die Hilfsbohrungen auf das Endmaß aufgebohrt und jeweils ein Hartmetall- bzw. Diamanteinsatz in an sich bekannter Weise eingepreßt.

Die Härtung der Oberflächenschicht erfolgt bevorzugt auf eine Härte zwischen 58 und 64 HRc und die Vergütung des Grundkörpers auf eine Härte zwischen 40 und 44 HRc.

Im folgenden wird die Erfindung in zwei Ausführungsbeispielen erläutert, die durch die Zeichnung in schematischer Darstellung veranschaulicht sind.

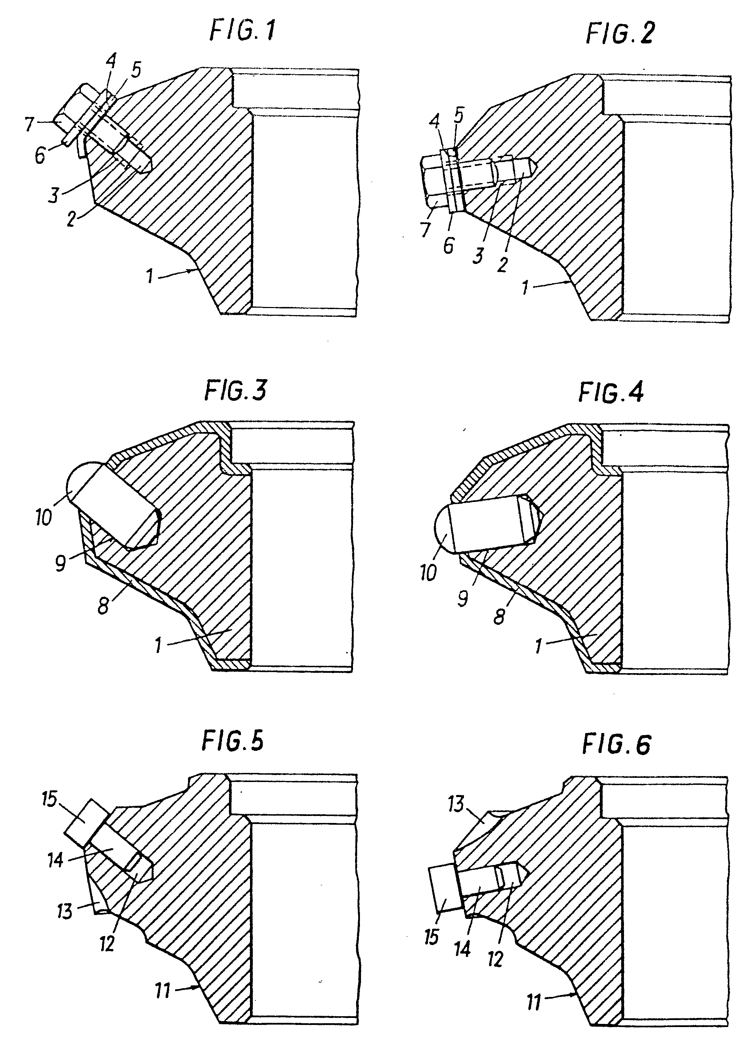

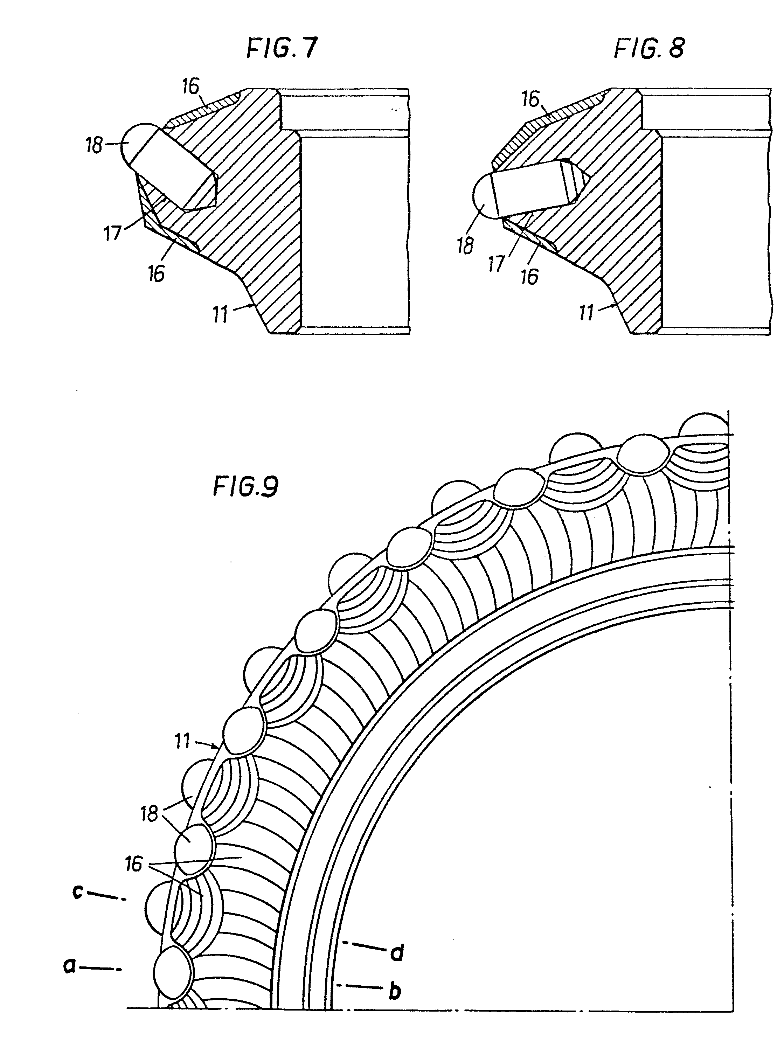

Die Fig. 1 bis 4 zeigen Querschnitte eines mit Hartmetalleinsätzen auszustattenden Schneidringes für eine Vollschnittmaschine, die Fig. 5 bis 8 Querschnitte eines anderen derartigen Schneidringes für eine Vollschnittmaschine und die Fig. 9 eine Draufsicht auf den letzteren. Der in Fig. 7 dargestellte Schnitt ist gemäß der Linie a-b und der in Fig. 8 gezeigte Schnitt nach der Linie c-d der Fig. 9 geführt.

Für das durch die Fig. 1 bis 4 veranschaulichte Ausführungsbeispiel gilt folgendes:

Der aus Vergütungsstahl (W.-Nr. 1.6746) bestehende Grundkörper 1 wurde durch Drehen hergestellt. Sodann wurden an den für die Hartmetalleinsätze vorgesehenen Stellen Hilfsbohrungen 2 eingebracht, in deren Flanken Innengewinde 3 geschnitten wurden. Sodann wurden zur Abdeckung der Oberfläche des Grundkörpers 1 in dem durch das Endmaß der Bohrungen 9 bestimmten Bereich jeweils ein an der dem Grundkörper 1 zugewandten Seite mit einer hitzebeständigen Abdichtmasse 4 für Aufkohlungsarbeiten (z. B. einer solchen mit der Markenbezeichnung »Condursal«) versehenes Kupferplättchen 5 und jeweils eine Beilagscheibe 6 gemeinsam mittels einer passenden Sechskantschraube 7 durch Hineindrehen derselben in das Innengewinde 3 am Grundkörper 1 befestigt. Hierauf wurde im Grundkörper 1 durch Randaufkohlung eine härtbare Oberflächenschicht gebildet. Die Randaufkohlung erfolgte mittels Karburiergas in einem Ofen bei 925° C mit der Maßgabe, nach einer dreistündigen Aufkohlung und Einschaltung einer etwa eineinhalbstündigen Diffusionszeit (zum Ausgleich des Kohlenstoffgehaltes in der bis etwa 2 mm Tiefe reichenden Randzone auf etwa 0,85% C) in etwa 3 mm Tiefe noch einen C-Gehalt von 0,45% C zu erhalten. Nach dem Abkühlen wurden die Schrauben 7 einschließlich der für die exakte Abdeckung verwendeten Kupferplättchen 5 und Stahlscheiben 6 vom Grundkörper 1 entfernt, worauf durch Härten (Ablöschen aus der Härtetemperatur im Warmbad und nachfolgendes Anlassen) die gewünschte verschleißfeste Oberfläche 8 mit einer Härte von ca. 58 bis 64 HRc hergestellt und zugleich eine Vergütung des Grundkörpers auf ca. 40 bis 44 HRc erreicht wurde. Im von den Plättchen 5 abgedeckten Bereich um die Hilfsbohrungen 2 war die Ausbildung der gehärteten Oberflächenschicht vermieden, so daß die Hilfsbohrungen 2 ohne weiteres auf das gewünschte Endmaß aufgebohrt werden konnten. In die Bohrungen 9 wurde nun je ein zylindrischer, stiftförmiger Hartmetalleinsatz 10 eingepreßt (sh. Fig. 3 und 4). Die Standzeit der auf diese Art hergestellten Schneidringe konnte auf das Doppelte angehoben werden.

Für das durch die Fig. 5 bis 9 veranschaulichte Ausführungsbeispiel gilt folgendes:

Der ebenfalls aus dem Vergütungsstahl W.-Nr. 1.6747 durch Drehen hergestellte Grundkörper 11 des Schneidringes wurde an den für die Hartmetalleinsätze vorgesehenen Stellen mit Hilfsbohrungen 12 und seitlich davon mit Vertiefungen 13 versehen. Hierauf wurden einen Bund 15 aufweisende Kupferstifte 14 entsprechender — d. h. satt anliegender — Dimension in jede der Hilfsbohrungen 12 hineingesteckt, so daß durch die Bunde 15 die Oberfläche des Grundkörpers 11 in dem bis zum Endmaß der jeweiligen Bohrung 17 reichenden Bereich abgedeckt wurde. Sodann wurde durch Auftragsschweißen mit umhüllten Stabelektroden (Sortenbezeichnung Böhler FOX Ledurit 65) auf den Grundkörper 11, insbesondere in dessen Vertiefungen 13 eine Hartauftragsschicht 16 gebildet. Nach Entfernung der Kupferstifte 14 vom Grundkörper 11 wurden die aufgepanzerten Teile einer Wärmebehandlung unterzogen, wobei die Härtung im Warmbad eine Härte von im Mittel 62 HRc für das Auftragsschweißgut und von 42 HRc für den Grundkörper ergab. Die Fertigstellung der Schneidringe erfolgt nun durch Einpressen der zylindrischen Hartmetalleinsätze 18 in die entsprechend aufgeweiteten Bohrungen 17.

Aufgrund der auch auf diese Art erzielten wesentlich verbesserten Verankerung der Einsätze im Grundkörper und der bis unmittelbar zu den Einsätzen reichenden Aufpanzerung seiner Oberfläche konnte ebenfalls eine wesentliche Standzeiterhöhung der Schneidringe erzielt werden.

Bei den erfindungsgemäß herzustellenden Arbeitswerkzeugen für Gestein und Mineralien kann es sich auch um andere Ausführungsarten, beispielsweise um Gesteinsbohrkronen für drehendes und/oder schlagendes Bohren handeln.

## Patentansprüche

1. Verfahren zur Herstellung von mit Hartmetall- oder Diamanteinsätzen (10, 18) bestückten Arbeitswerkzeugen für Gestein oder Mineralien, insbesondere von Schneidringen für Vollschnittmaschinen, wobei ein Grundkörper (1, 11) aus Stahl vorzugsweise durch Drehen hergestellt und mit Ausnehmungen (9, 17) für die Einsätze (10, 18) versehen wird, dadurch gekennzeichnet, daß im Grundkörper (1, 11) an den für die Einsätze bestimmten Stellen Hilfsbohrungen (2, 12) mit kleinerem Lumen hergestellt, und daß darin mit Köpfen (15) und gegebenenfalls zusätzlichen Scheibenringen (6) versehene Abdeckteile (4–7; 15) fixiert werden, deren Köpfe (15) mittelbar oder unmittelbar eine Abdeckung des zum gewünschten Endmaß der Bohrungen reichenden Oberflächenbereiches des Grundkörpers bewirken, daß dann im Grundkörper (1) eine härtbare Oberflächenschicht (8, 16), z. B. mit einer Stärke von ca. 3 mm, hergestellt, die Oberflächenschicht vorzugsweise nach Entfernung der Abdeckteile gehärtet und zugleich der Grundkörper vergütet wird, worauf die Hilfsbohrungen (2, 12) auf das Endmaß vergrößert und die Hartmetall- bzw. Diamanteinsätze (10, 18) in diese Ausnehmungen (9, 17) in an sich bekannter Weise eingebracht werden.

2. Verfahren nach Anspruch 1, dadurch gekennzeichnet, daß die härtbare Oberflächenschicht (8, 16), z. B. mit einer Stärke von 3 mm, durch Randaufkohlen des Grundkörpers (1, 11) hergestellt wird.

3. Verfahren nach Anspruch 2, dadurch gekennzeichnet, daß in die Flanken der Hilfsbohrungen (2) ein Gewinde (3) geschnitten und mit dem Kopf bzw. der Beilagscheibe (6) einer dazupassenden Schraube (7) ein auf der dem Grundkörper zugewandten Seite mit einer hitzebeständigen Abdichtmasse (4) für Aufkohlungsarbeiten versehenes Kupferplättchen (5) auf den Grundkörper (1) gepreßt, daß dann die härtbare Oberflächenschicht (8) durch Randaufkohlen des Grundkörpers hergestellt und nach Entfernung der Schrauben und Plättchen im Warmbad gehärtet sowie der Grundkörper vergütet wird, und daß schließlich die Hilfsbohrungen (2) auf das Endmaß (9) aufgebohrt werden und jeweils ein Hartmetall- bzw. Diamanteinsatz (10) in an sich bekannter Weise eingepreßt wird.

4. Verfahren nach Anspruch 1, dadurch gekennzeichnet, daß die härtbare Oberflächenschicht (16) durch Auftragsschweißen auf den Grundkörper (11) aufgebracht wird.

5. Verfahren nach Anspruch 4, dadurch gekennzeichnet, daß in die Hilfsbohrungen (12) je ein an deren Flanke satt anliegender, einen Bund (15) aufweisender Kupferstift (14) hineingesteckt wird, so daß die Bunde die bis zum Endmaß der Bohrung reichende Oberfläche des Grundkörpers abdecken, daß auf den Grundkörper (11), vorzugsweise in darin angebrachten Vertiefungen (13), härtbarer Stahl durch Auftragsschweißen aufgebracht wird, daß nach dem Entfernen der Kupferstifte die aufgebrachte Oberflächenschicht (16) gehärtet und zugleich der Grundkörper vergütet wird, und daß schließlich die Hilfsbohrungen (12) auf das Endmaß (17) aufgebohrt werden und jeweils ein Hartmetall- bzw. Diamanteinsatz (18) in an sich bekannter Weise eingepreßt wird.

6. Verfahren nach Anspruch 3 oder 5, dadurch gekennzeichnet, daß die Härtung der Oberflächenschicht (8, 16) auf eine Härte zwischen 58 und 64 HRc und die Vergütung des Grundkörpers auf eine Härte zwischen 40 und 44 HRc erfolgt.

7. Verfahren nach einem der vorangegangenen Ansprüche, dadurch gekennzeichnet, daß der von den Abdeckteilen (4–7; 15) abgedeckte Oberflächenbereich genau die auf das Endmaß vergrößerten Ausnehmungen (9, 17) umschließt, so daß die gehärtete Oberflächenschicht (8, 16) bis zu den Hartmetall- bzw. Diamanteinsätzen (10, 18) reicht.

## Claims

1. A method of producing tools which are tipped with hard metal or diamond insets (10, 18), for stone or minerals, in particular cutting rings for full cut machines, in which a base member (1, 11) is produced from steel preferably by turning and is provided with recesses (9, 17) for the insets (10, 18), characterized in that auxiliary bores (2, 12) with a relatively small internal diameter are produced in the base member (1, 11) at the places intended for the insets, and that covering portions (4–7, 15) provided with heads (15) and if necessary additional washers (6), are fixed therein, the heads (15) of the covering portions (4–7, 15) indirectly or directly forming a covering of the surface region of the base member which extends to the desired end measure of the bores, that then in the base member (1) a hardenable surface layer (8, 16) e. g. with a thickness of approximately 3 mm is produced, and the surface layer is hardened, preferably after removing the covering portions, and simultaneously the base member is tempered, so that the auxiliary bores (2, 12) are enlarged to the end measure, and the hard metal or diamond insets (10, 18) are fixed into these recesses (9, 17) in a manner known per se.

2. A method according to claim 1, characterized in that the hardenable surface layer (8, 16) e. g. with a thickness of 3 mm is produced by recarburizing the edges of the base member (1, 11).

3. A method according to claim 2, characterized in that a thread (3) is cut into the flanks of the auxiliary bores (2) and, with the head or the washer (6) of a screw (7) adapted thereto, a copper platelet (5) provided on the side facing the base member with a heat-resistant sealing mass (14) for recarburizing processes is pressed onto the base member, that then the hardenable surface layer (8) is produced by carburizing the edges of the base member and, after removing the screws and platelet, is hardened in a quenching bath and the base member is tempered, and that finally the auxiliary bores (2) are bored up to the end measure (9) and in each case a hard metal or diamond inset (10) is pressed-in in a manner known per se.

4. A method according to claim 1, characterized in that the hardenable surface layer (16) is aplied to the base member (11) by build-up welding.

5. A method according to claim 4, characterized in that in a respective copper pin (14), which lies closely on the flanks of the auxiliary bores (12) and comprises a collar (15), is inserted into each of the auxiliary bores (12) so that the collars cover the surface of the base member extending to the end measure of the bores, that hardenable steel is applied to the base member (11) by build-up welding, preferably in recesses (13) made therein, that after removing the copper pins the applied surface layer (16) is hardened and simultaneously the base member is tempered, and that finally the auxiliary bores (12) are bored to the end measure (17) and in each case a hard metal or diamond inset (18) is pressed-in in a manner known per se.

6. A method according to claim 3 or 5, characterized in that the hardening of the surface layer (8, 16) occurs to a hardness of between 58 and 64 HRc and the tempering of the base member occurs to a hardness of between 40 and 44 HRc.

7. A method according to one of the preceding claims, characterized in that the surface region covered by the covering portions (4—7, 15) encompasses precisely the recesses (9, 17) enlarged to the end measure, so that the hardened surface layer (8, 16) extends up to the hard metal or diamond insets (10, 18).

## Revendications

1. Procédé pour la fabrication d'outils de travail équipés de pièces d'insertion en diamant ou en métal dur (10, 18) pour roches ou minéraux, en particulier de bagues coupantes pour perforatrices à section complète, dans lequel un corps de base (1, 11) en acier est réalisé de préférence par tournage et est muni d'évidements (9, 17) pour les pièces d'insertion (10, 18), caractérisé en ce qu'on réalise dans le corps de base (1, 11), aux emplacements déterminés pour recevoir les pièces d'insertion, des trous auxiliaires (2, 12) à lumière réduite, et en ce qu'on fixe dans ceux-ci des éléments de recouvrement (4 à 7; 15), munis de têtes (15) et éventuellement de rondelles (6) supplémentaires, dont les têtes (15) assurent directement ou indirectement le recouvrement et la protection de la zone superficielle du corps de base correspondant à la cote finale souhaitée des trous, en ce qu'ensuite on réalise dans le corps de base (1) une couche superficielle (8, 16) apte à la trempe ayant par exemple une épaisseur d'environ 3 mm, puis on trempe cette couche superficielle de préférence après avoir enlevé les éléments de recouvrement, et on traite en même temps par revenu le corps de base, puis on agrandit les trous auxiliaires (12, 18) jusqu'à leur cote finale, et on met en place de façon connue en soi dans des évidements (9, 17) les pièces d'insertion en métal dur ou en diamant (10, 18).

2. Procédé selon la revendication 1, caractérisé en ce que la couche superficielle apte à la trempe (8, 16) est réalisée avec une épaisseur égale, par exemple, à 3 mm, par cémentation superficielle du corps de base (1, 11).

3. Procédé selon la revendication 2, caractérisé en ce que, dans les flancs des trous auxiliaires (2), on taille un filetage (3), et, avec la tête et éventuellement la rondelle de calage (6) d'une vis (7) adaptée à ce filetage, on serre fortement sur le corps de base (1) une plaquette de cuivre (5) munie sur sa face côté corps de base d'un matériau d'étanchéité (14) résistant aux températures élevées pour travaux de cémentation, en ce qu'ensuite on réalise la couche superficielle (8) trempante par cémentation superficielle du corps de base et, après avoir retiré vis et plaquettes, on la trempe au bain chaud en même temps qu'on traite le corps de base et en ce qu'enfin on agrandit les trous auxiliaires (2) jusqu'à leur cote finale (9) et on y enfonce de façon connue en soi une pièce d'insertion (10) en métal dur ou en diamant.

4. Procédé selon la revendication 1, caractérisé en ce que la couche superficielle (16) apte à la trempe est appliquée sur le corps de base (11) par soudage à superposition.

5. Procédé selon la revendication 4, caractérisé en ce qu'on engage dans chacun des trous auxiliaires (12) une cheville de cuivre (14) comportant une collerette (15), affleurée au flanc du trou, de façon que la collerette recouvre la surface du corps de base correspondant à la cote définitive du trou, en ce que, sur le corps de base et de préférence dans des cuvettes (13) creusées dans ce corps de base, on applique par soudage à superposition de l'acier trempant, en ce qu'après avoir retiré les chevilles de cuivre on procède à la trempe de la couche superficielle (16) appliquée en même temps qu'au traitement de revenu du corps de base et en ce qu'enfin on agrandit les trous auxiliaires (12) jusqu'à leur cote finale (17) et on y enfonce de façon connue en soi une pièce d'insertion (18) en métal dur ou en diamant.

6. Procédé selon la revendication 3 ou 5, caractérisé en ce que la trempe de la couche superficielle (8, 16) est effectuée à une dureté Rockwell (échelle C) comprise entre 58 et 64 et le traitement de revenu du corps de base à une dureté Rockwell (échelle C) comprise entre 40 et 44.

7. Procédé selon une quelconque des revendications précédentes, caractérisé en ce que la zone superficielle recouverte par les éléments de recouvrement (4 à 7; 15) entoure exactement les évidements (9, 17) agrandis à leur cote définitive de sorte que la couche superficielle (8, 16) trempée arrive jusqu'aux pièces d'insertion (10, 18) en métal dur ou en diamant.

FIG.1

FIG.2

FIG.3

FIG.4

FIG.5

FIG.6

## FIG. 7

16
18
17
16
11

## FIG. 8

16
18
17
16
11

## FIG.9

11
18
16
c
a
d
b